# FASCICULE DE BREVET EUROPEEN

(11) **EP 3 710 300 B1**
(45) Date de publication et mention de la délivrance du brevet: **09.07.2025**
(21) Numéro de dépôt: 18800246.3
(22) Date de dépôt: 10.10.2018
(51) Int. Cl.: B60K 6/52, B60K 6/387, B60W 10/02, B60W 20/40

(54) **PROCÉDÉ DE CONTRÔLE D'UN DISPOSITIF D'ENGAGEMENT D'UNE MACHINE ÉLECTRIQUE DE VÉHICULE HYBRIDE, ET VÉHICULE AUTOMOBILE HYBRIDE**
CONTROL METHOD FOR THE COUPLING DEVICE OF AN ELECTRIC MACHINE OF A HYBRID VEHICLE, AND HYBRID VEHICLE
VERFAHREN ZUR STEUERUNG EINER KOPPLUNGSVORRICHTUNG DER ELEKTROMASCHINE EINES HYBRIDFAHRZEUGS, SOWIE HYBRIDFAHRZEUG

(30) Priorité: 15.11.2017 FR 1760734
(43) Date de publication de la demande: 23.09.2020
(73) Titulaire: Stellantis Auto SAS, 78300 Poissy (FR)
(72) Inventeur: MILHAU, Yohan, 78630 Orgeval (FR); GRIGORIE, Simona Corina, 92150 Suresnes (FR); BARDET, Arnaud, 78150 Le Chesnay (FR); ROCQ, Gaetan, 78125 La Boissiere Ecole (FR)
(74) Mandataire: PSIP
(86) Numéro de dépôt international: PCT/FR2018/052513
(87) Numéro de publication internationale: WO 2019/097129

(56) Documents cités:
- EP-A1- 0 965 770
- EP-A1- 1 482 204
- WO-A1-2011/049576
- WO-A1-2014/184462
- WO-A1-2014/184462
- FR-A1- 2 927 849
- FR-A1- 2 927 849
- FR-A1- 3 048 397
- FR-A1- 3 048 397

## Description

La présente invention concerne un procédé de contrôle sur un véhicule hybride d'un dispositif d'engagement d'une machine électrique avec les roues, ainsi qu'un véhicule hybride comportant des moyens mettant en œuvre un tel procédé de contrôle.

Un type de véhicule hybride utilisant l'énergie électrique, appelé « Full hybride » pour hybride complet en langue anglaise, comporte une première motorisation disposant d'un moteur thermique relié par une boîte de vitesses automatique à des roues du véhicule, et une machine électrique annexe reliée à la boîte de vitesses automatique pour ajouter un couple moteur en prélevant une énergie sur une batterie basse tension, ou pour recharger cette batterie en prélevant un couple moteur.

Une deuxième motorisation comprenant une machine électrique principale de traction alimentée par la batterie basse tension, est reliée à des roues par un dispositif d'engagement qui peut comporter un embrayage ou des crabots. En particulier le moteur thermique peut entraîner les roues avant du véhicule, et la deuxième motorisation les roues arrière.

Les deux motorisations permettent de réaliser un roulage avec le moteur thermique seul, un roulage avec le moteur thermique et les machines électriques afin d'augmenter la puissance disponible, un roulage sans émission de gaz polluants avec les machines électriques uniquement, ou une récupération d'énergie lors des freinages en utilisant ces machines en génératrice.

La machine électrique principale entraînée en rotation en fonctionnant à vide, absorbe par son freinage une puissance sensiblement proportionnelle à sa vitesse de rotation, qui peut dépasser 1kW pour des vitesses supérieures à 80km/h. Afin de réduire les pertes par un entraînement à vide de cette machine électrique, son dispositif d'engagement est si possible ouvert quand cette machine n'est pas utilisée.

De plus on peut fermer systématiquement le dispositif d'engagement aux basses vitesses, par exemple inférieure à 50km/h, afin d'améliorer la prestation du véhicule en mode électrique en obtenant une meilleure réactivité. On peut aussi ouvrir systématiquement le dispositif d'engagement au-delà d'une certaine vitesse, pour éviter d'endommager la machine électrique présentant une vitesse limite.

Par ailleurs un type de transmission pour un véhicule hybride, présenté notamment par le document US-A1-20150045179, comporte deux machines électriques et un train planétaire permettant de réaliser successivement une position de marche avant « D », une position neutre « N » de point mort, une position de marche arrière « R » et une position de parking « P » bloquant la transmission, qui sont commandées dans cet ordre par un levier actionné par le conducteur.

D'une manière générale les boîtes de vitesses automatiques comportent cette succession de positions, qui permet au conducteur de passer rapidement de la marche avant D vers la marche arrière R et inversement sans s'arrêter sur la position neutre N, afin de réaliser des manoeuvres de parking.

Pour les véhicules hybrides comportant une machine électrique principale entraînant des roues par le dispositif d'engagement, ce dispositif est fermé suivant la consigne de couple demandé par le conducteur, ce qui nécessite un temps de couplage pouvant varier entre 0,3 et 1,5 seconde selon la technologie du dispositif. Un crabot peut s'engager en plus de 0,8 seconde, un embrayage est plus rapide à fermer.

Avec un levier de commande disposé dans la position neutre N ou parking P, l'ouverture du dispositif d'engagement est systématique pour des raisons sécuritaires afin de désaccoupler la chaîne de transmission de la machine électrique.

Dans ce cas lors de manoeuvres de parking, un passage de la marche avant D à la marche arrière R ou inversement passe systématiquement par la position intermédiaire du neutre N qui génère alors automatiquement une ouverture du dispositif d'engagement. Malgré un passage rapide sur la position neutre N, une fois l'ouverture du dispositif d'engagement demandé et commencé cette opération s'accomplit entièrement, avant de procéder juste après à sa fermeture pour le roulage sur la position suivante.

On obtient un temps d'attente pour obtenir la disponibilité de roulage avec la machine électrique sur la position suivante, qui pose des problèmes de prestations dégradées de conduite.

On connaît en outre du document FR-A1-3048397 un procédé de contrôle du fonctionnement d'un moteur thermique appartenant à une chaîne de transmission hybride parallèle d'un véhicule et couplé à un embrayage et à une boîte de vitesses de type manuel et contrôlée par un levier de vitesse permettant à un conducteur de sélectionner des rapports dits thermiques, et des rapports dits électriques et un état neutre sur une ligne de neutre.

La présente invention a notamment pour but d'éviter ces inconvénients de la technique antérieure.

Elle propose à cet effet un procédé de contrôle selon la revendication 1.

Un avantage de ce procédé de contrôle est que pour un passage rapide effectué par le conducteur de la position initiale de marche avant vers la position finale de marche arrière, ou inversement, en franchissant avec le levier de commande la position neutre sans s'y arrêter, le temps de passage sur cette position neutre étant inférieur à la temporisation ne permet pas de commander l'ouverture du dispositif d'engagement.

L'arrivée sur la position finale de marche avant ou arrière trouve le dispositif d'engagement fermé, s'il était déjà fermé sur la position initiale, permettant instantanément un démarrage du véhicule sur cette position finale avec une traction par la machine électrique. Le conducteur obtient une bonne réactivité du véhicule qui est satisfaisante.

Selon l'invention, avant le passage sur la position neutre, le procédé calcule une temporisation brute présentant une durée qui varie de manière inversée par rapport à la vitesse du véhicule et, au moment du passage sur la position neutre, le procédé calcule la temporisation effective à partir de la temporisation brute de ce moment.

Avantageusement la temporisation effective présente une durée qui n'augmente pas après le moment de passage de la position neutre.

En particulier, la temporisation effective peut présenter une durée stabilisée à partir du moment de passage de la position neutre.

Avantageusement, le procédé impose la temporisation effective pour une vitesse du véhicule dépassant un seuil minimum de vitesse.

Dans ce cas, avantageusement le seuil minimum de vitesse comporte un seuil de vitesse haut qui est franchi lors d'une accélération du véhicule, et un seuil de vitesse bas inférieur au seuil de vitesse haut, qui est franchi lors d'un ralentissement de ce véhicule.

Avantageusement, la temporisation brute dépend de paramètres ayant un effet sur le temps d'ouverture ou de fermeture du système d'engagement, comprenant en particulier la température extérieure, la température de l'huile de ce système, l'altitude du véhicule ou la pente du roulage.

L'invention a de plus pour objet un véhicule automobile selon la revendication 7.

En particulier, la machine électrique peut être reliée aux roues arrière du véhicule par le dispositif d'engagement comportant des crabots.

L'invention sera mieux comprise, et d'autres buts, caractéristiques, détails et avantages de celle-ci apparaîtront plus clairement dans la description explicative qui va suivre, faite en référence aux dessins annexés donnés uniquement à titre d'exemple illustrant un mode de réalisation de l'invention, et dans lesquels :
- la figure 1 est un schéma d'un véhicule hybride mettant en œuvre un procédé de contrôle selon l'invention ;
- les figures 2 et 3 sont des schémas présentant lors du roulage du véhicule, en fonction du temps différents paramètres de fonctionnement pour une ouverture du dispositif d'engagement qui est respectivement activée et inactivée ; et
- la figure 4 est un schéma présentant les variations de la durée de temporisation suivant la vitesse du véhicule.

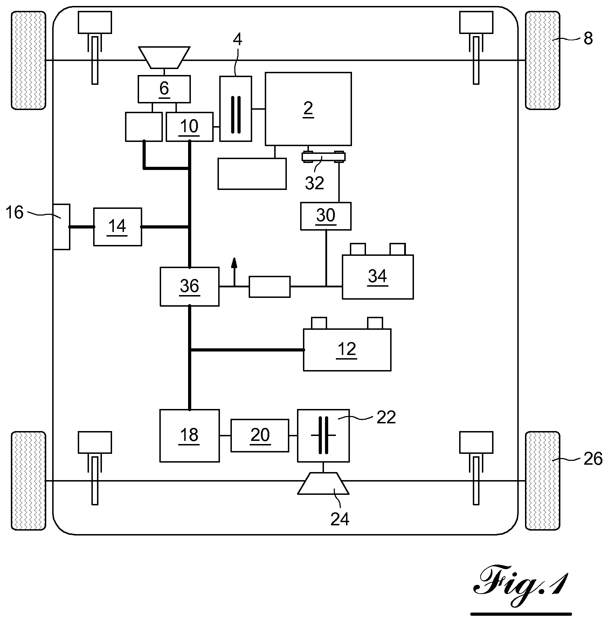

La figure 1 présente un véhicule hybride comportant un moteur thermique 2 entraînant par un embrayage 4 piloté de manière automatique, une boîte de vitesses automatique 6 comportant différents rapports de vitesse, reliée aux roues avant motrices 8 de ce véhicule.

L'arbre d'entrée de la boîte de vitesses 6 recevant le mouvement de l'embrayage 4, comporte une machine électrique avant de traction 10 alimentée par une batterie basse tension de traction 12. De cette manière la machine électrique avant 10 peut délivrer un couple sur les roues motrices 8 sans passer par l'embrayage 4, en utilisant les différents rapports de vitesse proposés par la transmission 6.

Un chargeur embarqué 14 peut être relié par une prise extérieure 16 à un réseau de distribution d'électricité, pour recharger la batterie de traction 12 quand le véhicule est à l'arrêt. La batterie de traction 12 présente une basse tension, qui peut être par exemple de 220 ou 300V.

La batterie de traction 12 alimente aussi une machine électrique arrière principale de traction 18 reliée successivement par un réducteur 20 et un système de crabotage 22 formant un dispositif d'engagement, à un différentiel arrière 24 répartissant le mouvement vers les roues arrière du véhicule 26. En variante le dispositif d'engagement peut comporter un embrayage.

Un alternateur 30 relié en permanence par une courroie 32 au moteur thermique 2, alimente un réseau de bord 34 comportant une batterie très basse tension. En complément la batterie du réseau de bord 34 peut être chargée par un convertisseur de tension continue DC/DC 36, recevant une énergie électrique de la batterie de traction 12, ou d'une machine électrique avant 10 ou arrière 18 si le niveau d'énergie de cette batterie de traction est insuffisant.

Lors des freinages du véhicule ou d'un relâchement de la pédale d'accélérateur, les machines électriques 10, 18 travaillent en génératrice en délivrant un couple de freinage, pour recharger la batterie de traction 12 et récupérer une énergie.

Un calculateur du groupe motopropulseur relié à un superviseur de surveillance du véhicule, contrôle le fonctionnement de ce groupe motopropulseur pour répondre aux demandes du conducteur tout en optimisant les consommations d'énergie et les émissions de gaz polluants.

En particulier le calculateur commande la fermeture ou l'ouverture du système de crabotage 22, pour respectivement permettre une traction du véhicule par la machine électrique arrière 18, ou au contraire ne pas l'entraîner lors du roulage du véhicule.

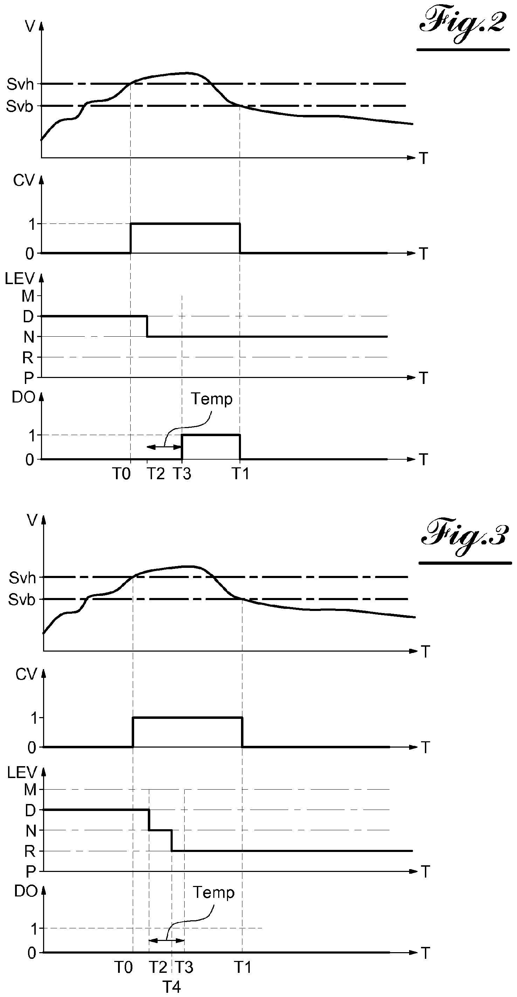

La figure 2 présente en fonction du temps T représenté sur l'axe horizontal, successivement en partant du haut, la vitesse du véhicule V, un critère de vitesse du véhicule CV, la position du levier de commande LEV de la boîte de vitesses 6, et un état de la demande d'ouverture du dispositif d'engagement DO.

La position du levier de commande LEV comporte successivement en partant du haut, une position de marche avant M dans laquelle le conducteur peut sélectionner le rapport choisi, une position de marche avant automatique sur tous les rapports D, une position neutre N, une position de marche arrière R et une position de parking P.

La vitesse du véhicule V comporte un seuil de vitesse haut Svh qui est franchi au temps T0 lors d'une accélération de ce véhicule, et un seuil de vitesse bas Svb inférieur au seuil de vitesse haut, qui est franchi au temps T1 lors d'un ralentissement. On obtient entre ces deux seuils une vitesse suffisamment élevée du véhicule, permettant au critère de vitesse CV de passer de l'état 0 à l'état 1.

L'écart entre le seuil de vitesse haut Svh et le seuil de vitesse bas Svb forme une hystérésis évitant une instabilité du critère de vitesse autour d'une valeur de seuil qui serait unique.

Au départ le véhicule roule en marche avant D avec le moteur thermique, et la machine électrique 18 utilisant le système de crabotage 22 qui est fermé. La vitesse du véhicule V est légèrement croissante, en franchissant le seuil de vitesse haut Svh au temps T0.

En variante le véhicule peut rouler sur un rapport de vitesse choisi avec la position M.

Au temps T2 un peu après le temps T0, le conducteur déplace le levier de commande de la boîte de vitesses automatique 6 pour passer de la position de marche avant D à la position neutre N, et rester sur cette position neutre.

Le procédé va alors appliquer à partir de ce temps T2 une temporisation effective Temp dépendant de la vitesse du véhicule, conduisant au temps T3 où il vérifie si la demande de position neutre N est toujours présente. Cette condition étant vérifiée, au temps T3 le procédé émet une demande d'ouverture DO du système de crabotage 22 qui passe au niveau 1, la machine électrique 18 est désolidarisée des roues arrière 26.

La figure 3 présente les mêmes conditions de départ que celles présentées figure 2.

Au temps T2 le conducteur déplace le levier de commande de la boîte de vitesses automatique pour passer de la position de marche avant D à la position de marche arrière R atteinte au temps T4, en passant de manière rapide sur la position neutre N.

Le procédé va alors appliquer à partir de ce temps T2 la même temporisation effective Temp puisque la vitesse du véhicule est identique, conduisant au temps T3 où il vérifie si la demande de position neutre N est toujours présente. Cette condition n'étant pas vérifiée au temps T3, le procédé n'émet alors pas de demande d'ouverture DO du système de crabotage 22 qui reste au niveau 0.

La machine électrique 18 reste solidarisée des roues arrière 26, le conducteur peut aussitôt demander un roulage en marche arrière avec cette machine électrique, sans temps d'attente ce qui améliore la prestation.

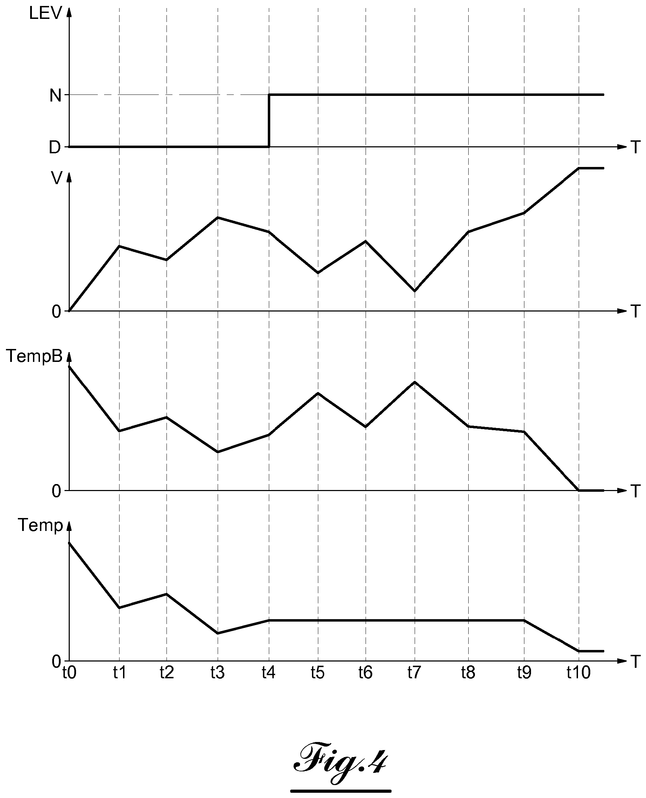

La figure 4 présente en fonction du temps T représenté sur l'axe horizontal, successivement en partant du haut, la position du levier de vitesse LEV, la vitesse du véhicule V, une temporisation brute Temp B dépendant de la vitesse, et la temporisation effective Temp utilisée par le procédé pour délivrer la demande d'ouverture du système de crabotage 22.

Du temps t0 au temps t4 le véhicule roule en marche avant D. La temporisation brute Temp B varie de manière inversée par rapport à la vitesse du véhicule V, en diminuant quand cette vitesse s'accroît et en augmentant quand cette vitesse baisse. La temporisation effective Temp est identique à la temporisation brute temp B. Cette variation de la temporisation effective Temps à l'inverse de la vitesse du véhicule V, permet de mieux anticiper le temps de confirmation nécessaire avant la demande d'ouverture du système de crabotage 22.

Au temps t4 le conducteur demande la position neutre N, la temporisation effective Temp à partir de ce moment devient stabilisée. D'une manière générale on peut réaliser pour cette période une stabilisation de la temporisation effective Temp, ou une diminution, mais en aucun cas une augmentation car on pourrait obtenir un changement de demande de pilotage du système de crabotage 22 créant une instabilité.

De plus la demande d'ouverture du système de crabotage 22 peut être conditionnée au dépassement du seuil de vitesse minimum du véhicule comprenant le seuil de vitesse haut Svh et le seuil de vitesse bas Svb, avec le critère de vitesse CV à l'état 1, atteint par exemple lors d'une manoeuvre en marche avant, quand le conducteur demande la marche arrière avant l'arrêt de ce véhicule pour anticiper son recul.

Par ailleurs la temporisation Temp peut aussi dépendre de tout autre paramètre pouvant avoir un effet sur le temps d'ouverture ou de fermeture du système de crabotage 22, comme la température extérieure, la température de l'huile de ce système, l'altitude du véhicule ou la pente du roulage.

D'une manière générale, le procédé selon l'invention permet d'améliorer la disponibilité du roulage avec la machine électrique de traction 18, en réduisant des temps morts d'attente avant son accouplement.

## Revendications

1. Procédé de contrôle d'un dispositif d'engagement (22) reliant une machine électrique (18) à des roues (26) d'un véhicule hybride, ce véhicule comportant un moteur thermique (2) entraînant des roues (8) par une boîte de vitesses (6) commandée par un levier présentant successivement des positions de marche avant (M, D), une position neutre (N) et une position de marche arrière (R), **caractérisé en ce que** dans le cas d'un passage d'une position de marche avant (M, D) ou de la position de marche arrière (R), vers la position neutre (N), il impose une temporisation effective (Temp) avant de demander une ouverture du dispositif d'engagement (22), et avant le passage sur la position neutre (N), il calcule une temporisation brute (Temp B) présentant une durée qui varie de manière inversée par rapport à la vitesse du véhicule (V), et au moment du passage sur la position neutre (N) il calcule la temporisation effective (Temp) à partir de la temporisation brute (Temp B) de ce moment.

2. Procédé de contrôle selon la revendication 1, dans lequel la temporisation effective (Temp) présente une durée qui n'augmente pas après le moment de passage de la position neutre (N).

3. Procédé de contrôle selon la revendication 2, dans lequel la temporisation effective (Temp) présente une durée stabilisée à partir du moment de passage de la position neutre (N).

4. Procédé de contrôle selon l'une quelconque des revendications précédentes, imposant la temporisation effective (Temp) pour une vitesse du véhicule (V) dépassant un seuil minimum de vitesse.

5. Procédé de contrôle selon la revendication 4, dans lequel le seuil minimum de vitesse comporte un seuil de vitesse haut (Svh) qui est franchi lors d'une accélération du véhicule, et un seuil de vitesse bas (Svb) inférieur au seuil de vitesse haut (Svh), qui est franchi lors d'un ralentissement de ce véhicule.

6. Procédé de contrôle selon l'une quelconque des revendications 1 à 5, dans lequel la temporisation brute (Temp B) dépend de paramètres ayant un effet sur le temps d'ouverture ou de fermeture du système d'engagement (22), comprenant en particulier la température extérieure, la température de l'huile de ce système, l'altitude du véhicule ou la pente du roulage.

7. Véhicule automobile hybride équipé d'un moteur thermique (2) entraînant des roues (8) par une boîte de vitesses (6) commandée par un levier, et une machine électrique (18) reliée à des roues (26) par un dispositif d'engagement (22), **caractérisé en ce qu'**il comporte des moyens mettant en œuvre un procédé de contrôle de ce dispositif d'engagement (22) selon l'une quelconque des revendications précédentes.

8. Véhicule automobile selon la revendication 7, dans lequel la machine électrique (18) est reliée aux roues arrière (26) du véhicule par le dispositif d'engagement (22) comportant des crabots.

## Patentansprüche

1. Verfahren zur Steuerung einer Einrückvorrichtung (22), die eine Maschine verbindet Elektro (18) an die Räder (26) eines Hybridfahrzeugs, wobei dieses Fahrzeug einen Wärmemotor (2) umfasst, der die Räder (8) über ein Getriebe (6) antreibt, das von einem Hebel, der nacheinander Vorwärtspositionen (M, D), eine Neutralposition (N) und eine Rückwärtsposition (R) darstellt, **dadurch gekennzeichnet, dass** er im Falle eines Wechsels von einer Vorwärtsposition (M, D) oder von der Rückwärtsposition (R) in die Neutralposition (N) eine effektive Zeitverzögerung (Temp) einführt, bevor er eine Öffnung der Eingriffsvorrichtung (22) anfordert, und bevor der Wechsel in die In der Neutralstellung (N) berechnet es eine Rohzeitverzögerung (Temp B) mit einer Dauer, die umgekehrt proportional zur Fahrzeuggeschwindigkeit (V) ist, und im Moment des Umschaltens in die Neutralstellung (N) berechnet es die effektive Zeitverzögerung (Temp) aus der Rohzeitverzögerung (Temp B) zu diesem Zeitpunkt.

2. Steuerverfahren nach Anspruch 1, bei dem die wirksame Zeitverzögerung (Temp) eine Dauer hat, die nach dem Zeitpunkt des Durchlaufens der Neutralstellung (N) nicht mehr zunimmt.

3. Steuerverfahren nach Anspruch 2, bei dem die effektive Zeitverzögerung (Temp) ab dem Zeitpunkt des Verlassens der Neutralstellung (N) eine stabile Dauer hat.

4. Steuerungsverfahren nach einem der vorhergehenden Ansprüche,
Auferlegen der effektiven Zeitverzögerung (Temp) für eine Fahrzeuggeschwindigkeit (V), die einen Mindestgeschwindigkeitsschwellenwert überschreitet.

5. Steuerverfahren nach Anspruch 4, bei dem der Mindestschwellenwert Geschwindigkeit hat eine hohe Geschwindigkeitsschwelle (Svh), die während der Beschleunigung überschritten wird
des Fahrzeugs und eine niedrige Geschwindigkeitsschwelle (Svb), die niedriger ist als die hohe Geschwindigkeitsschwelle (Svh), die überschritten wird, wenn das Fahrzeug langsamer wird.

6. Steuerverfahren nach einem der Ansprüche 1 bis 5, bei dem
Das Rohtiming (Temp B) hängt von Parametern ab, die sich auf die Öffnungs- bzw. Schließzeitpunkt des Einrücksystems (22), wobei insbesondere die Außentemperatur, die Temperatur des Öls in diesem System, die Höhenlage des Fahrzeugs oder die Rollneigung einbezogen werden.

7. Hybrid-Kraftfahrzeug mit einem Verbrennungsmotor (2) Antriebsräder (8) durch ein Getriebe (6), das durch einen Hebel gesteuert wird, und eine elektrische Maschine (18), die durch eine Einrückvorrichtung (22) mit Rädern (26) verbunden ist, **dadurch gekennzeichnet, dass** sie Mittel umfasst, die ein Verfahren zur Steuerung dieser Vorrichtung implementieren
Eingriff (22) nach einem der vorhergehenden Ansprüche.

8. Kraftfahrzeug nach Anspruch 7, wobei die Maschine
Der Elektromotor (18) ist über eine aus Klauen bestehende Eingriffsvorrichtung (22) mit den Hinterrädern (26) des Fahrzeugs verbunden.

## Claims

1. Method for controlling an engagement device (22) connecting an electric machine (18) to wheels (26) of a hybrid vehicle, this vehicle comprising a thermal engine (2) driving wheels (8) by a gearbox (6) controlled by a lever successively having forward gear positions (M, D), a neutral position (N) and a reverse gear position (R), **characterized in that** in the case of a transition from a forward gear position (M, D) or from the reverse gear position (R), to the neutral position (N), it imposes an effective time delay (Temp) before requesting opening of the engagement device (22), and before transitioning to the neutral position (N), it calculates a gross time delay (Temp B) having a duration that varies inversely with respect to the vehicle speed (V), and at the time of transition to the neutral position (N) it calculates the effective time delay (Temp) from the gross time delay (Temp B) of this moment.

2. A control method according to claim 1, wherein the effective time delay (Temp) has a duration that does not increase after the moment the vehicle is shifted into neutral (N).

3. A control method according to claim 2, wherein the effective time delay (Temp) has a duration that stabilizes from the moment the vehicle is shifted into neutral (N).

4. 4 A control method according to any one of the preceding claims,
Imposing the effective time delay (Temp) for a vehicle speed (V) exceeding a minimum speed threshold.

5. A control method according to claim 4, wherein the minimum speed threshold comprises a high speed threshold (Svh) that is crossed when the vehicle accelerates, and a low speed threshold (Svb) lower than the high speed threshold (Svh), which is crossed when the vehicle slows down.

6. A control method according to any one of claims 1 to 5, wherein the raw time delay (Temp B) depends on parameters having an effect on the opening or closing time of the engagement system (22), including in particular the outside temperature, the oil temperature of this system, the vehicle's altitude, or the driving gradient.

7. A hybrid motor vehicle equipped with a thermal engine (2) driving wheels (8) via a gearbox (6) controlled by a lever, and an electric machine (18) connected to wheels (26) via an engagement device (22), **characterized in that** it comprises means implementing a method for controlling this engagement device (22) according to any one of the preceding claims.

8. A motor vehicle according to claim 7, wherein the electric machine (18) is connected to the rear wheels (26) of the vehicle via the engagement device (22) comprising dog clutches.
